# EUROPEAN PATENT APPLICATION

(11) **EP 1 157 607 A2**
(43) Date of publication of application: **28.11.2001**
(21) Application number: 00308569.3
(22) Date of filing: 29.09.2000
(51) Int. Cl.: A01G 31/02

(54) **Method and apparatus for growing ornamental plants by hydroponic cultivation**

(30) Priority: 26.05.2000 JP 2000156621; 04.09.2000 JP 2000266696; 26.09.2000 JP 2000291378
(71) Applicant: Hirose Co., Limited, Narashino City, Chiba 275-0026 (JP)
(72) Inventor: Hirose, Mitsuru, Youkaichiba-city, Chiba 289-2107 (JP)
(74) Representative: Brunner, Michael John

(57) **Abstract**

A method for growing ornamental plants by hydroponic cultivation includes the steps of arranging a piece of a tree 2 in a water tank 1; fixing support members 3 to the tree; placing a plant 5 on the support members, the roots of the plants being embedded in soil 4, and supplying water so that the water level 61 becomes equal to or lower than the level of the support members, the support members 3 being permeable to water and free to deform.

An apparatus used for growing ornamental plants by hydroponic cultivation, utilises a piece of a tree 2 to be arranged in a water tank 1 and support members 3 to be fixed to the tree. The support members 3 are permeable to water and free to deform, thereby making it possible to realise the growing of plants 5 by hydroponic cultivation on the tree 2.

## Description

The present invention relates to a hydroponic method and an apparatus therefor in which a piece of a tree is placed in a water tank for growing plants (which may be garden plants), which also serve as ornamental plants, arranging the tree for hydroponic cultivation.

A method for growing ornamental plants and furthermore, for placing a piece of a tree in a water tank to create the taste of the nature therein has been employed among hydroponic cultivation hobbyists.

However, in conventional methods for growing ornamental plants, apart from a piece of a tree, the plants were grown with the roots thereof being extended into the sand in the bottom of the tank.

However, such a method for growing plants that allows a piece of a tree and plants to simply exist in the same tank is not good enough to provide an ornamental effect.

An object of the present invention is to provide a method for growing ornamental plants by hydroponic cultivation and an apparatus therefor, which overcomes the inadequate ornamental effect provided by the prior art as described above. At the same time, another object of the present invention is to provide a construction for growing plants by means of hydroponic cultivation with the plants and the tree being integrated with each other.

According to the present invention there is provided a method for growing ornamental plants by hydroponic cultivation comprising the steps of: arranging a piece of a tree in a water tank, fixing support members to the tree, the support members being permeable to water and free to deform; placing plants on the support members, the roots of the plants being integrated with soil; and supplying water to the support members, in order to implement hydroponic cultivation of the plants on the tree.

The invention also includes an apparatus used for growing ornamental plants by hydroponic cultivation, the apparatus including a water tank, a piece of a tree arranged in the water tank, and support members fixed to the tree, the support members being permeable to water and free to deform, thereby making it possible to realise the growing of plants by hydroponic cultivation on the tree.

An example of the present invention will now be described with reference to the accompanying drawings, in which:
Figure 1 is a perspective view illustrating a piece of a tree placed in a water tank.
Figure 2 is a perspective view illustrating support members placed on a portion with a recessed portion and a branched portion of the tree.
Figure 3 is a perspective view illustrating plants, the roots of which are integrated with the soil, placed on the support members.
Figure 4 is a schematic view illustrating the state in which water is supplied onto a piece of tree by means of a water supply pump and a pipe, and part of the water is branched to a support member.

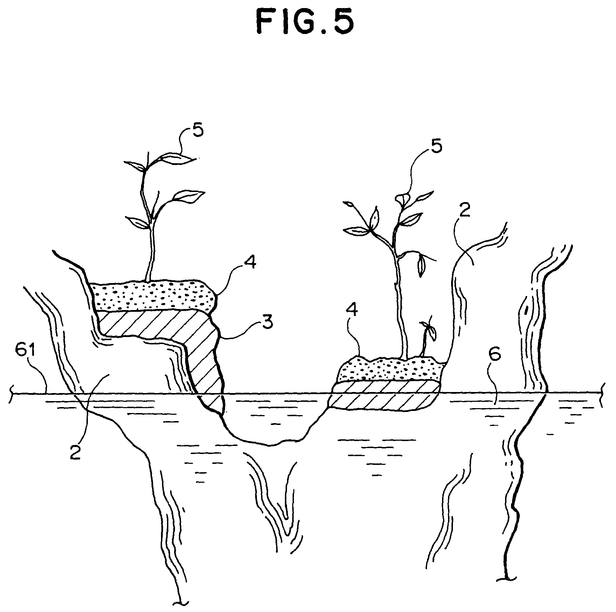

Figure 5 is a side view illustrating soil placed on two positions of the support member, showing the positional relationship between a support member for placing soil at a higher position and a support member for placing soil at a lower position.

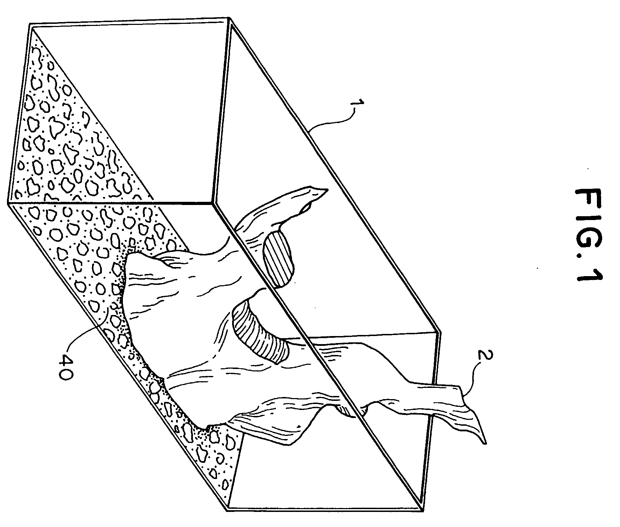

As the first step in the method, as shown in Figure 1, a piece of a tree 2 is arranged in a water tank 1. In this case, it is not necessarily required to place bottom floor sand 40 in the tank 1. However, plants can be grown safely by hydroponic cultivation using the bottom floor sand 40.

Although the tree 2 is not limited to a particular type, natural driftwood (natural wood floating in rivers) is suitable for appreciation purposes since it has a variety of shapes.

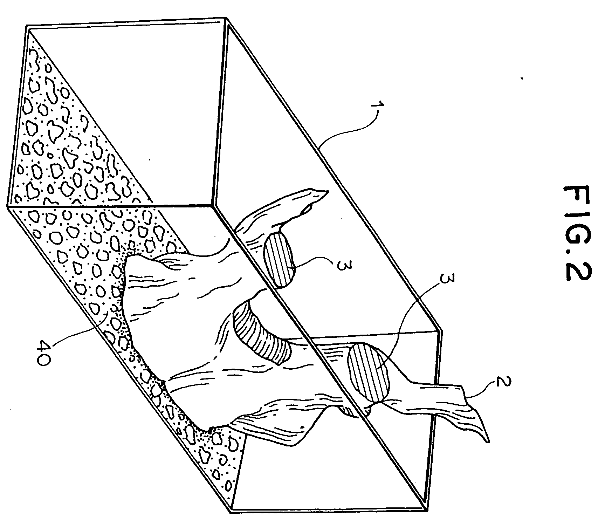

As the second step, as shown in Figure 2, support members 3 are adhered to the tree 2, which are permeable to water and free to deform.

The support members 3 can be deformed as desired, so that the members can be adhered to the tree 2 that has a variety of shapes.

As the support members 3, which are permeable to water and can freely deform, cloth-like raw materials can be employed; however, cotton-like raw materials made of fabrics such as synthetic resin fabrics, metal strings, or wood chips are used in general.

Among the foregoing raw materials, synthetic resin fabrics are advantageous in that they can freely deform and will never corrode, while fabrics made of metal strings are advantageous in that they have good support characteristics.

Consideration should be given to prevent the support members 3 from dropping off the tree 2 when the support members 3 are adhered to the tree 2. For this reason, the support members are typically placed on a portion of the tree 2 with a recess or on a branched portion thereof.

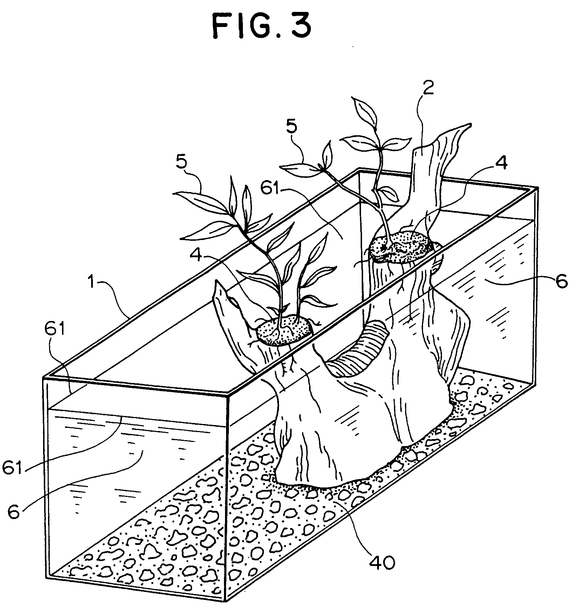

As the third step, as shown in Figure 3, plants 5 are further placed on the support members, with the roots of the plants 5 being integrated with soil.

In Figure 3, the support members 3 are hidden because soil 4 and the plants 5 are placed thereon, and are therefore covered.

After the third step has been completed, fertilizers are fed into the water of the tank 1 as required, thereby allowing the plants 5 to grow on the tree 2.

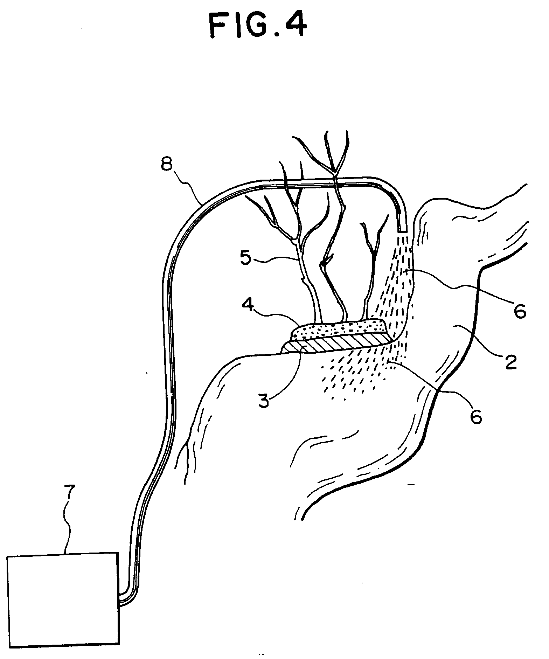

As shown in Figure 4, the water in the tank is typically supplied by means of a water supply pump 7 and a pipe 8 and part of the water is branched so as to pass through the support members 3. In this case, the water that has passed through the support members 3 will wet the support members 3 and reach the soil 4 by capillary action.

When neither the water supply pump 7 nor the pipe 8 is used, the water level 61 may be adjusted to reach the same level as that of the support members 3 as shown in Fig.3. In this case, the water would reach the soil 4 due to the capillary action of the support members 3.

When the support members 3 are adhered to some portions of the tree 2 and the levels of the soil 4 placed on the support members 3 are different from each other, the lower end of a support member 3 for placing the soil 4 thereon at a higher position is extended to a position substantially at the same level as the position of a support member 3 for placing the soil 4 thereon at the lowermost position. In addition, the water level 61 is adjusted to come to a level of the support member 3 for placing the soil 4 thereon at the lowermost position. This makes it possible to cause the water to reach the support member for placing the soil at a higher position and thus to the level of the soil at a higher position by capillary action.

As described in the foregoing, when a cotton-like raw material is used as the support members 3, the roots of the plants 5 will penetrate the material downwardly to reach the tree 2, where the plants may take root in the tree 2. This allows the plants to become firmly adhered to the tree.

The method of the present invention will allow the plants 5 to grow on the tree 2 to cause the tree 2 to be integrated with the plants 5, thereby enabling one to enjoy the rich taste of nature.

As described already, it is necessary that the support members 3 should be prevented from dropping off the piece of the tree 2 when the former is attached to the latter.

In the embodiment shown in Figure 2, the support members are fixedly attached to the tree 2 with adhesive in order to prevent the support members 3 from dropping off the tree 2. By using an adhesive as such, the support members 3 can be attached to a portion of the tree 2 where a recessed portion is available or to any other portion of the tree 2 without being limited to a branched portion. This makes it possible to grow the plants 5 at any desired portion of the tree 2 and thus enjoy versatile ornamentation.

As may be apparent from in Figure 3, there is a possibility that soil 4, which is placed on the support members 3 and in which the roots of the plants 5 are embedded, may form a suspension in the water. As this effect would be regarded as undesirable an alternative soil may be used in a second embodiment. This alternative sintered soil typically has a majority component of volcanic ash. The sintered soil does not dissolve in contact with water, thus never interfering with appreciation by turning the water cloudy, as is the case with usual soil.

The sintered soil, at a thickness of about 1cm, maintains growth conditions such that the roots of the plants can penetrate the soil, when the soil components are combined with each other at the level wherein the soil collapses or breaks when acted upon by a pressure of 1.5 kg cm⁻¹ s⁻². Thus, the sintered soil is very convenient because the soil will not interfere with appreciation as mentioned above and is available for growing the plants as well.

The bottom floor sand 40 may be replaced with sintered soil, this sinter is composed of an acid soil and a carbonate of alkali metal (for example: K₂CO₃, Na₂CO₃) or alkali-earth metal (for example: CaCO₃, BaCO₃). When using this sinter the pH value of the water may be kept within constant ranges. The carbonate of an alkali metal or alkali-earth metal can resolve alkali metal ion (for example: K⁺, Na⁺), or an alkali-earth metal ion (for example: Ca⁺⁺, Ba⁺⁺) in water, and may decompose hydro acid ion (OH⁻), and so relieve the acid state of the water which can be caused by keeping aquarium fish. Conversely the acidic soil may decompose hydro ion (H⁺), and so relieve the alkaline state of the water which can be caused by growing aquatic plants.

A sinter which is baked with temperature 60~100°C, and includes water at 20~30 weight % is preferred, because such a baking temperature and such a state of including water may realise comfortable strength against pressure.

Aquatic plants can be grown in bottom floor soil 40 of such composition, and we can enjoy growing both ornamental plants and aquatic plants in the water tank 1. This sinter may also be used as soil 4 on support members 3.

According to the present invention described above, it becomes possible to grow plants by hydroponic cultivation in a container with the plants integrated with a piece of a tree. Hence, a three dimensional decoration with a particularly natural element can be appreciated. Moreover, when roots of plants penetrate minute holes in the tree, an effect can also be obtained such that the plants can absorb nutrients from the tree, and the tree and the plants can be integrated firmly with each other.

Furthermore, it becomes also possible to increase the appreciative effect by keeping fish to be appreciated such as tropical fish or goldfish in the tank.

## Claims

1. A method for growing ornamental plants by hydroponic cultivation comprising the steps of:
arranging a piece of a tree (2) in a water tank (1), fixing support members (3) to the tree, the support members being permeable to water and free to deform;
placing plants (5) on the support members, the roots of the plants being integrated with soil (4); and
supplying water (6) to the support members, in order to implement hydroponic cultivation of the plants on the tree.

2. A method according to claim 1, wherein the step of supplying water (6) to the support members (3) includes supplying the water via a pump (7) and a pipe (8), and separating the supply and directing water to wet each of the support members.

3. A method according to claims 1 or 2, wherein the support members (3) are disposed at a plurality of levels on the tree, and the lowermost end portion of each support member other than the lowermost is disposed substantially at the same level as that of the lowermost support member, whereby the water level (61) can be adjusted to this level to supply water (6) to each support member.

4. A method according to any of claims 1 to 3, wherein a bottom soil (40) comprising a sinter which is composed of an acid soil and a carbonate of an alkali metal or an alkali-earth metal, is laid at the bottom of the water tank (1), and aquatic plants (5) are planted on the bottom soil (40).

5. A method according to claim 4, wherein a sinter is baked with temperature 60~100°C, and includes water at 20~30 weight %.

6. An apparatus used for growing ornamental plants by hydroponic cultivation, the apparatus including a water tank (1), a piece of a tree (2) arranged in the water tank, and support members (3) fixed to the tree, the support members being permeable to water and free to deform, thereby making it possible to realise the growing of plants by hydroponic cultivation on the tree.

7. An apparatus according to claim 6, wherein the support members (3) are disposed at a plurality of levels on the tree (2), and the lowermost end portion of each support member other than the lowermost is disposed substantially at the same level as that of the lowermost support member whereby the water level (61) can be adjusted to this level to supply water (6) to each support member.

8. An apparatus according to any of claims 6 and 7, wherein the support members (3) include a cotton-like raw material made of synthetic resin fabrics.

9. An apparatus according to any of claims 6 to 8, wherein the support members (3) are placed on a portion with a recess or on a branched portion of the tree (2).

10. An apparatus according to any of claims 6 to 9, wherein the support members (3) are fixed to the tree (2) with adhesive.

11. An apparatus according to any of claims 6 to 10, wherein the majority component of the soil (4) is volcanic ash.

12. An apparatus according to any of claims 6 to 11, wherein a bottom soil (40) comprising a sinter which is composed of an acid soil and a carbonate of an alkali metal or an alkali-earth metal, is laid at the bottom of the water tank (1), thereby making is possible to realise the growing of aquatic plants (5) on the bottom soil (40).

13. An apparatus according to claim 12, wherein a sinter is baked with temperature 60~100°C, and includes water at 20~30 weight %.
